# EUROPÄISCHE PATENTSCHRIFT

(11) **EP 1 949 869 B1**
(45) Veröffentlichungstag und Bekanntmachung des Hinweises auf die Patenterteilung: **12.03.2014**
(21) Anmeldenummer: 07001444.4
(22) Anmeldetag: 24.01.2007
(51) Int. Cl.: A61C 1/00

(54) **Mechanisch geführtes medizinisches, insbesondere dentales Handgriffelement**
Mechanically driven medical, particularly dental handpiece
Pièce à main médicale, en particulier dentaire, entrainée mécaniquement

(43) Veröffentlichungstag der Anmeldung: 30.07.2008
(73) Patentinhaber: W & H Dentalwerk Bürmoos GmbH, 5111 Bürmoos (AT)
(72) Erfinder: Putz, Stefan, 5110 Oberndorf bei Salzburg (AT); Rauchenzauner, Stephan, 5110 Oberndorf bei Salzburg (AT); Schatz, Norbert, 5111 Bürmoos (AT); Schmiedlechner, Karl, 5121 Ostermiething (AT); Wagner, Hannes, 5023 Salzburg (AT)

(56) Entgegenhaltungen:
- DE-A1- 10 066 004
- FR-A- 1 009 957
- US-A- 4 725 232
- US-B1- 6 270 342
- US-E- R E36 917

## Beschreibung

Die vorliegende Erfindung betrifft ein medizinisches, insbesondere dentales Handgriffelement nach dem Oberbegriff des Anspruchs 1.

Aus der Patentschrift US 6,270,342 sind dentale Handgriffe mit Generatoren bekannt, wobei die Generatoren durch ein Fluid angetrieben werden, das von einer externen Fluidquelle über einen entsprechenden Anschluss am Handgriff und eine Leitung durch den Handgriff zum Generator geleitet wird. Der Generator liefert unterschiedlichen Verbrauchern, wie zum Beispiel einem Laser, einem Antrieb für ein dentales Werkzeug, einer Lichtquelle, einem Ultraschall- oder Mikrowellengenerator elektrische Energie für ihren Betrieb.

Das Dokument FR 1.009.957 offenbart ein Handstück gemäß dem Oberbegriff des Anspruchs 1 mit einem Generator, der in Form eines Adapters zwischen das Handstück und den Antrieb für das Handstück einfügbar ist.

Das Patent US 4,725,232 offenbart Handgriffeinheiten mit druckluftbetriebenen Generatoren und ein Ausführungsbeispiel einer Handgriffeinheit, die einen ersten Motor umfasst, der über eine Welle einen Generator antreibt. Der vom Generator erzeugte Strom wird über eine elektrische Leitung einem Handstück zugeführt. In dem Handstück befindet sich ein zweiter Motor zum Antrieb der Werkzeugaufnahme, der mit dem vom Generator erzeugten Strom betrieben wird.

Es gibt für unterschiedliche medizinische und dentale Anwendungen viele Handgriffe, die keinen Anschluss an eine externe Fluidquelle haben. Andere Handgriffe weisen zwar einen Anschluss an eine externe Fluidquelle, zum Beispiel an eine Druckluftquelle auf, jedoch wird das dem Handgriff zugeführte Fluid für andere Zwecke benötigt bzw. ist die dem Handgriff zugeführte Durchflussmenge des Fluids, der Fluiddruck oder der Energiegehalt des Fluids zu gering, um einen Generator antreiben zu können.

Der vorliegenden Erfindung liegt daher die Aufgabe zugrunde einen Handgriff oder ein Handgriffelement mit einem alternativen Antriebsmechanismus für den Generator zu schaffen, so dass dem Handgriff oder Handgriffelement zum Betrieb des Generators insbesondere kein Antriebsfluid zuzuführen ist.

Diese Aufgabe wird gemäß der vorliegenden Erfindung durch eine medizinisches, insbesondere dentales Handgriffelement mit den Merkmalen des Anspruchs 1 gelöst. Besonders vorteilhafte Ausführungsformen sind in den Unteransprüchen angeführt.

Das erfindungsgemäße medizinische, insbesondere dentale Handgriffelement ist mit einer Kupplungsvorrichtung zur lösbaren Verbindung des Handgriffelements mit einer Antriebseinheit, einer mit dem Handgriffelement verbundenen oder verbindbaren Werkzeugaufnahme und mit einem Triebelement zur Übertragung einer Antriebsbewegung von der Antriebseinheit auf die Werkzeugaufnahme, so dass die Werkzeugaufnahme in eine Arbeitsbewegung versetzbar ist, versehen. Das Triebelement umfasst zumindest eine in Rotation versetzbare Welle, die direkt oder indirekt mit dem Generator verbunden ist und diesen antreibt. Damit können Generatoren auch in Handgriffelementen ohne oder mit nicht geeigneter Fluidzufuhr betrieben werden. Als Generatoren werden im Folgenden elektrodynamischen Wandler zur Umsetzung mechanischer in elektrische Energie verstanden.

Bevorzugt ist der Rotor des Generators bzw. der gesamte Generator koaxial zur zumindest einen Welle des Triebelements angeordnet. Damit kann in vorteilhafter Weise die Anzahl der Lager für die Lagerung der Welle und des Rotors reduziert werden, insbesondere können beide Bauteile durch nur zwei Wälzlager gelagert werden. Des Weiteren kann durch den koaxialen Aufbau der Durchmesser des Handgriffelements möglichst gering gehalten werden, so dass das Handgriffelement gut handhabbar ist.

Oftmals weisen Handgriffelemente ein Triebelement mit mehreren Wellen oder Wellenteilen auf, die zum Beispiel über Zahnräder oder Getriebe miteinander verbunden sind. Die Wellen verlaufen dabei meist im Wesentlichen hintereinander durch das Handgriffelement, so dass eine erste Welle näher zur Kupplungsvorrichtung angeordnet ist als eine zweite Welle. Bevorzugt ist bei diesem Aufbau der Generator um die erste Welle angeordnet, so dass er insbesondere bei Wartungen oder zum Austausch bei Beschädigung in einfacher Weise durch die Öffnung der Kupplungsvorrichtung entnehmbar ist. Ein weiterer Vorteil dieser Anordnung liegt im vereinfachten Herstellungsverfahren für verschiedene Handgriffelemente mit unterschiedlichen Getrieben, da bei der Anordnung des Generators an der ersten Welle und somit vor dem Getriebe bei allen Handgriffelementen der gleiche Drehzahlbereich vorliegt, wodurch der gleiche Generator verwendet werden kann.

Die Kupplungsvorrichtungen von Handgriffelementen sind häufig mit einem Aufnahmeelement, insbesondere einem Kupplungsrohr zur Aufnahme eines Kupplungsgegenstücks versehen. Alternativ oder zusätzlich zur Anordnung des Generators um die erste Welle kann der Generator zumindest teilweise in oder an dem Aufnahmeelement oder in oder an einem Fortsatz des Aufnahmeelements angeordnet sein. Da das Aufnahmeelement durch die Öffnung der Kupplungsvorrichtung meist sehr einfach aus dem Handgriffelement lösbar ist, wird die Entnahme oder der Austausch des Generators damit zusätzlich erleichtert.

Erfindungsgemäß umfasst der Begriff Handgriffelement gerade Handgriffe oder Handstücke, gebogene Handgriffe oder Handstücke, die im Dentalbereich oftmals als Winkelstücke bezeichnet werden, als auch Teile von Handgriffen. Derartige Teile können zum Beispiel durch einen Griffabschnitt eines Handgriffs gebildet sein, der zum Beispiel mit verschiedenen Kopfabschnitten für unterschiedliche Werkzeuge oder mit Getrieben für unterschiedliche Über- oder Untersetzungen verbindbar ist. Die Teile von Handgriffen können jedoch auch als Zwischenstücke, Kupplungen, Adapter oder eigenständige Hülsenabschnitte ausgebildet sein.

Der Generator kann zur Versorgung eines oder mehrerer Verbraucher mit elektrischer Energie dienen, zum Beispiel eines Diodenlasers, eines Antriebs für ein dentales Werkzeug, einer Beleuchtungsvorrichtung, eines Ultraschall- oder Mikrowellengenerators, eines Analgesiegeräts, von Messsensoren, zum Beispiel zur Messung von Temperaturen, der Beschleunigung, des Drehmoments, der Drehzahl oder der Schallstärke, von Mikrofonen, von Aktoren, zum Beispiel Piezoelementen zur Schwingungsdämpfung, von Schaltkreisen zur Verarbeitung oder Aufbereitung von Daten oder Messwerten, von Steuer- und / oder Regelschaltungen, von Datenübertragungsvorrichtungen und Sendern, von Vorrichtungen zur Erkennung von an das Handgriffelement anschließbaren Werkzeugen oder Instrumenten und von Anzeigen oder Displays. In einem bevorzugten Ausführungsbeispiel betreibt der Generator eine Beleuchtungsvorrichtung mit zumindest einem optischen Halbleiterelement, insbesondere mit zumindest einer Leuchtdiode, die für das menschliche Auge sichtbares Licht mit einer Wellenlänge von etwa 370 - 800 nm abstrahlt.

Ein Nachteil der Versorgung einer Beleuchtungsvorrichtung mit elektrischer Energie durch einen Generator, der durch eine Welle des Triebelements des Handgriffelements betrieben wird, liegt in der sich ständig verändernden Leistungsabgabe des Generators, bedingt durch die Änderung der Drehzahl der Welle während der medizinischen Behandlung. Üblicherweise werden in Handgriffelementen zur Beleuchtung der Präparationsstelle Glühbirnen verwendet, die insbesondere bei Betrieb unterhalb der Nennleistung eine merkbare Verschiebung der Farbtemperatur des emittierten Strahlungsspektrums aufweisen. Die Folge ist eine für den Anwender merkbar schlechtere Ausleuchtung der Präparationsstelle und eine Änderung des subjektiven Farbempfindens. Es besteht somit die Aufgabe, eine Beleuchtungsvorrichtung zu schaffen, die für einen Betrieb mit einer Stromquelle mit schwankender Stromversorgung, insbesondere mit einem Generator besser geeignet ist. Dies wird durch die Verwendung eines oder mehrerer optischer Halbleiterelemente, insbesondere einer Weißlichtleuchtdiode, als Leuchtmittel erreicht, da die Farbtemperatur der Weißlichtleuchtdioden bei Betrieb unter der Nennleistung im Vergleich zu Glühbirnen relativ konstant ist und Leuchtdioden gegenüber der schwankenden Stromversorgung weniger empfindlich sind. Damit wird eine gleichmäßigere Beleuchtung, unabhängig von der Drehzahl der Welle des Handgriffelements erzielt.

In einer speziellen Ausführungsform umfasst die Leuchtdiode zusätzlich ein Farbkonversionsmaterial, um die Wellenlänge der vom Leuchtdiodenchip emittierten Strahlung zu verändern, insbesondere in weißes Licht. Derartige Farbkonversionsmaterialen können zum Beispiel Lumineszenzfarbstoffe enthalten, die durch blaues Licht zum Leuchten angeregt werden und gelbes Licht abgeben. Wird nur ein Teil der emittierten blauen Strahlung in gelbes Licht umgewandelt, so ergibt die additive Mischung der beiden Farben ein weißes Licht. Als Farbkonversionsmaterialen können zum Beispiel Orthosilikate oder YAG-Farbstoffe verwendet werden.

Ein erstes Ausführungsbeispiel betrifft ein chirurgisches, insbesondere dental-chirurgisches Handgriffelement. Diese chirurgischen Handgriffelemente weisen an einem Ende eine Kupplungsvorrichtung auf, über die sie an eine Antriebseinheit, insbesondere einen Elektromotor anschließbar sind. Die Antriebseinheit ist über eine Leitung mit einer Regel- und / oder Steuereinheit verbunden, die den Betrieb der Antriebseinheit und des Handgriffelements steuert bzw. regelt, über die der Anwender oftmals zusätzlich verschiedene Betriebsprogramme für die Antriebseinheit und das Handgriffelement auswählen oder einzelne Betriebsparameter einstellen oder verändern kann und die häufig zusätzlich eine Pumpe antreibt, die sterile Flüssigkeit aus einem Flüssigkeitsbehälter oder - beutel zur Behandlungsstelle fördert. Die Regel- und / oder Steuereinheit umfasst neben Stellelementen zur Auswahl der Betriebsprogramme oder Betriebsparameter meist auch eine Fußsteuerung. Die Regel- und / oder Steuereinheit ist über ein Kabel mit einer Stromquelle verbunden. Das Handgriffelement, die Antriebseinheit und die Regel- und / oder Steuereinheit bilden somit eine kompakte und tragbare, d.h. für eine Einzelperson einfach von einem ersten Ort zu einem zweiten Ort transportierbare chirurgische Behandlungsvorrichtung, für deren Betrieb ausschließlich die Verbindung zu einer Stromquelle notwendig ist.

Mit chirurgischen, insbesondere dental-chirurgischen Handgriffelement werden häufig besonders schwierige, eine hohe Genauigkeit erfordernde Eingriffe ausgeübt, insbesondere auch das Einbringen von Implantaten in Gewebe, zum Beispiel von Zahnimplantaten in den Kieferknochen. Diese Eingriffe erfordern oftmals die Beachtung besonderer Bedingungen oder das Erfüllen spezielle Voraussetzungen, wie zum Beispiel das Anlegen eines im Vergleich zu anderen medizinischen Behandlungen höheren Drehmoments, eine sehr vorsichtige und langsame Durchführung zumindest bestimmter Behandlungsschritte oder eine visuelle Überwachung des Einbringens des Implantats durch den Anwender. Um diese Bedingungen erfüllen zu können, werden chirurgische, insbesondere dental-chirurgische Handgriffelement üblicherweise mit einem Motordrehzahlbereich von etwa 3.000 bis 50.000 Umdrehungen pro Minute betrieben, wobei insbesondere der Drehzahlbereich zwischen etwa 3.000 bis etwa 20.000 Umdrehungen pro Minute für medizinische Handgriffelemente außergewöhnlich nieder ist.

Bei der Integration eines Generators in ein chirurgisches, insbesondere dental-chirurgisches Handgriffelement besteht daher eine zusätzliche Herausforderung darin, den durch die Welle des Triebelements angetriebenen Generator derart auszubilden, dass er schon bei Drehzahlen der Welle und damit auch des mit der Welle verbundenen Rotors ab etwa 3.000 Umdrehungen pro Minute eine ausreichende Leistung zum Betrieb des Verbrauchers abgibt. Insbesondere soll die abgegebene Leistung groß genug sein, um eine Beleuchtungsvorrichtung zu betreiben, die eine oder mehrere optische Halbleiterelemente, insbesondere eine oder mehrere Leuchtdioden, umfasst. Um eine für die chirurgische Anwendung ausreichende Beleuchtungsstärke von etwa 11 kLux zu erhalten, sollte die vom Generator abgegebene und von der Leuchtdiode verwendbare Leistung pro Leuchtdiode zumindest etwa 110 mW betragen.

Im oberen Drehzahlbereich des chirurgischen, insbesondere dental-chirurgischen Handgriffelements, insbesondere über etwa 30.000 Umdrehungen pro Minute besteht des Weiteren die Anforderung, dass die abgegebene Leistung des Generator nicht zu groß wird, wodurch der oder die vom Generator mit elektrischer Energie versorgten Verbraucher zerstört, beschädigt oder ihre Lebensdauer erheblich verkürzt werden können.

Bei der Versorgung von Leuchtdioden durch den Generator ist des Weiteren zu berücksichtigen, dass der Generator Wechselstrom zur Verfügung stellt. Da Leuchtdioden bevorzugte Stromflussrichtungen aufweisen, kann der Wechselstrom entweder über bekannte elektrische oder elektronische Gleichrichter in Gleichstrom umgewandelt werden oder die Leuchtdiode bevorzugt mit Wechselstrom jenseits der so genannten Flimmerfrequenz (entsprechend zumindest etwa 25 Hz Wechselspannung) betrieben werden, ab der für das menschliche Auge der Eindruck einer konstanten, nicht unterbrochenen Lichtabgabe entsteht. Es ist somit von der Leuchtdiode nur jede zweite Halbwelle des sinusförmigen verlaufenden Wechselstroms und nur ein Teil der vom Generator erzeugten Leistung für die Lichterzeugung verwendbar, jedoch wird bei diesem Ausführungsbeispiel in vorteilhafter Weise kein Gleichrichter benötigt.

Zur Lösung dieser Aufgabe besteht in einer ersten Ausführungsform die Möglichkeit für das Handgriffelement einen Generator zu verwenden, der im unteren Drehzahlbereich ausreichend Energie für den Verbraucher zur Verfügung stellt. Insbesondere im hohen Drehzahlbereich wird vom Generator erzeugte, überschüssige Energie in einem Energiespeicher gespeichert, zum Beispiel einem mehrfach aufladbaren Akkumulator, einer Kapazität oder einer Induktivität, und später einem oder mehreren Verbrauchern zur Verfügung gestellt. Gegebenenfalls sind wiederum elektrische oder elektronische Bauelemente vorzusehen, die die vom Energiespeicher abgegebene Energie für den jeweiligen Verbraucher aufbereiten. Bei dem Verbraucher kann es sich bevorzugt wiederum um eine oder mehrere Leuchtdioden handeln. Dieses Ausführungsbeispiel hat zusätzlich den Vorteil, dass die Energieversorgung eines oder mehrerer Verbraucher unabhängig vom Betrieb des Generators durchführbar ist, so dass zum Beispiel die Beleuchtungsvorrichtung auch noch betreibbar ist, wenn der Generator keine oder nicht ausreichend Energie erzeugt. In einem bevorzugten Beispiel ist eine Schaltung vorgesehen, die die Beleuchtungsvorrichtung noch 5 - 60 Sekunden, insbesondere 15 - 30 Sekunden nach dem Stopp des Generators mit Energie versorgt, so dass der Anwender bei Behandlungspausen oder nach dem Ende der Behandlung die Präparationsstelle ausleuchten kann.

Alternativ oder zusätzlich zur Aufnahme eines Akkumulators in das Handgriffelement können in einer zweiten Ausführungsform eine oder mehrere Vorrichtungen zum Abbau zumindest eines Teils der überschüssigen, vom Generator erzeugten Energie im Handgriffelement vorgesehen sein. Bei diesen Vorrichtungen kann es sich um unterschiedliche elektrische und / oder elektronische Bauteile handeln, wie zum Beispiel um Z-Dioden, Step-Down-Converter, Widerstände oder Voltage-Regulatoren mit mehreren Transistoren.

Sowohl der Einbau eines Akkumulators als auch die Aufnahme von Vorrichtungen zum Abbau von Energie bringen jedoch mehrere Nachteile mit sich: Insbesondere die Abmessungen der dentalen chirurgischen Handgriffelement sind aufgrund ihrer Anwendung in der Mundhöhle sehr gering, so dass für die Aufnahme zusätzlicher Bauteile neben dem Generator kaum Platz vorhanden ist. Die Vorrichtungen zum Abbau von Energie erzeugen des Weiteren beträchtliche Wärmemengen, so dass die Notwendigkeit besteht, zumindest einen Teil dieser Wärme abzuleiten, da sich ansonsten das Handgriffelement so stark erwärmt, dass der Anwender das Handgriffelement nicht mehr in der Hand halten kann. Des Weiteren sind Akkumulatoren nicht mehrfach sterilisierbar.

Es stellt sich somit die Aufgabe einen Generator für ein chirurgisches, insbesondere dental-chirurgisches Handgriffelement derart auszubilden, dass der Generator ein möglichst optimales Leistungsverhalten aufweist, d.h. dass er bereits ab Drehzahlen des Rotors von etwa 3.000 Umdrehungen pro Minute eine ausreichende Leistung zum Betrieb des oder der Verbraucher, insbesondere zumindest einer Leuchtdiode erbringt, und dass sich mit steigender Drehzahl die Zunahme der Leistungsabgabe verringert, so dass keine zusätzlichen Energieabbauvorrichtungen oder Energiespeicher notwendig sind.

Zur Lösung dieser Aufgabe weist der Generator in einer bevorzugten dritten Ausführungsform für ein chirurgisches, insbesondere dental-chirurgisches Handgriffelement einen Stator und einen Rotor auf, der mit der in Rotation versetzbaren Welle des Triebelements direkt oder indirekt verbunden ist, wobei der Rotor ein magnetisches Rückschlusselement oder Magnetflusselement umfasst. Bevorzugt besteht das Magnetflusselement aus einem zentralen Körper, von dem radial mehrere Fortsätze abstehen, die durch Zwischenräume voneinander getrennt sind. Der Generator weist des Weiteren ein Magnetelement auf, das aus mehreren einzelnen Dauermagneten bestehen kann, wobei die einzelnen Magnete mit abwechselnder Polung und rotationsymmetrisch angeordnet sind. Alternativ kann das Magnetelement einen geschlossenen, zum Beispiel gepressten oder gesinterten Magnetring umfassen, der abschnittweise mit abwechselnder Polung aufmagnetisiert wird, so dass der Magnetring mehrere Dauermagnetbereiche aufweist. Bevorzugt ist die Anzahl der Dauermagnete oder Dauermagnetbereiche doppelt so groß ist wie die Anzahl der radialen Fortsätze des Magnetflusselements des Rotors. Besonders bevorzugt umfasst der Stator zumindest eine Spule und ein Magnetelement. Er kann gegebenenfalls zumindest noch ein weiteres Magnetflusselement aufweisen.

Bei Betrieb des Handgriffelements wird das Magnetflusselement des Rotors in Drehung versetzt, so dass abwechselnd ein magnetischer Fluss durch die Dauermagnete oder Dauermagnetbereiche mit gleicher Polung, über das oder die Magnetflusselemente, insbesondere die Fortsätze des Magnetflusselements des Rotors und durch die Spulen entsteht, wodurch ein Wechselfeld aufgebaut und eine Wechselspannung induziert wird. Überraschenderweise kann mit einem derart aufgebauten Generator eine Leistungskurve erzielt werden, die die oben angeführten Anforderungen, insbesondere eine ausreichende Leistungsabgabe bei geringen Drehzahlen und eine verringerte Leistungsabgabe bei höheren Drehzahlen, ausreichend erfüllt. Der Einbau zusätzlicher Energieabbauvorrichtungen oder Energiespeicher in das Handgriffelement ist somit nicht notwendig.

In einer besonders bevorzugten Ausführungsform ist das chirurgische, insbesondere dental-chirurgische Handgriffelement mit einer Beleuchtungsvorrichtung versehen, die insbesondere eine Leuchtdiode umfasst. Der Generator dieses Handgriffelements weist einen Luftspalt von etwa 0,12 mm - 0,35 mm, bevorzugt von 0,18 mm - 0,32 mm, besonders bevorzugt von 0,24 mm - 0,28 mm auf. Das Magnetelement dieses Generators umfasst 16 bis 24 Einzelmagnete oder Magnetbereiche, bevorzugt zwanzig Einzelmagnete oder Magnetbereiche, dies entspricht zehn Polpaaren. Entsprechend umfasst das Magnetflusselement des Rotors acht bis zwölf, bevorzugt zehn Fortsätze. Das Magnetelement hat in etwa eine Länge von 4 mm - 9 mm, bevorzugt etwa 5 mm - 7 mm, besonders bevorzugt 6 mm - 7 mm und eine Dicke von kleiner etwa 0,7 mm, bevorzugt von unter 0,5 mm. Die Breite eines Einzelmagneten beträgt unter etwa 1,5 mm, bevorzugt unter etwa 1,3 mm. Die magnetische Remanenz des gesamten Magnetelements beträgt etwa 1.000 bis 1.500 mT, bevorzugt etwa 1.100 bis 1.200 mT. Des Weiteren sind zwei seriell geschaltete Spulen vorgesehen, deren Windungsanzahl pro Spule etwa 80 bis 130 Windungen, bevorzugt 110 bis 120 Windungen beträgt. Alternativ kann auch nur eine Spule vorgesehen sein. Die Abmessungen der Spulen betragen etwa 13 mm * 7 mm * 1,5 mm, bevorzugt etwa 10,2 mm * 5 mm * 1 mm. Mit diesem Aufbau wird die Leistungsabgabe des Generators auf etwa 1 Watt maximale Leistung begrenzt, ohne dafür elektrische oder elektronische Bauteile oder Vorrichtungen zum Abbau überschüssiger Energie verwenden zu müssen. Damit ist eine optimale Stromversorgung der einen Leuchtdiode realisiert, so dass die eine Leuchtdiode insbesondere bei hohen Drehzahlen des Rotors nicht mit zu hoher Versorgungsleistung gespeist wird, wodurch die Lebensdauer der Leuchtdiode verringert würde. Auch ist die Beleuchtungsstärke der Leuchtdiode damit auf etwa 35 kLux begrenzt, wodurch kein für das menschliche Auge zu grelles Licht auf die Präparationsstelle abgegeben wird.

Durch diesen Aufbau wird als weiterer Vorteil auch die Verlustleistung des Generators gering gehalten, maximal bei in etwa 1,5 Watt. Damit ist sichergestellt, dass die Erwärmung des Generators und des Handgriffelements auch bei längerem Betrieb nicht derart stark ist, dass der Anwender das Handgriffelement nicht mehr in der bloßen Hand halten kann.

Ein zweites Ausführungsbeispiel betrifft ein medizinisches, insbesondere dentalmedizinisches Handgriffelement. Der Generator dieses Handgriffelements weist einen Rotor und einen Stator auf, wobei der Rotor ein Magnetelement umfasst, das auf der zumindest einen, in Rotation versetzbaren Welle des Triebelements befestigt ist. Der Vorteil dieses Generators liegt in seiner einfachen und kostengünstigen Herstellungsweise. Aufgrund des geringen und nicht beliebig vergrößerbaren Durchmessers des Handgriffelements besteht jedoch ein Problem dieses Aufbaus darin, eine ausreichende magnetische Feldstärke zur Verfügung zu stellen, so dass der Generator eine für den Verbraucher ausreichende Leistung abgeben kann.

In einer ersten Ausführungsform ist das Magnetelement als hohlzylindrischer, zwei- oder mehrpoliger Dauermagnet ausgebildet, durch dessen Innenbohrung die in Rotation versetzbare Welle verläuft. Zumindest ein Teil dieser Welle, insbesondere jener Teil, der in der Innenbohrung des Magnetelements aufgenommen ist, ist bevorzugt aus einem magnetisch leitenden Material hergestellt, zum Beispiel aus Stählen. Dadurch wird eine bessere magnetische Leitung für das Magnetfeld des Magnetelements erzielt, so dass der Generator eine höhere Leistung erzeugen kann. Zusätzlich oder alternativ kann die Welle, auf der das Magnetelement befestigt ist, einen ersten Abschnitt mit einem ersten Durchmesser und einen zweiten Abschnitt mit einem zweiten geringeren Durchmesser aufweisen. Das Magnetelement ist dabei am zweiten, dünneren Abschnitt befestigt, wobei aufgrund des verringerten Durchmessers des zweiten Wellenabschnitts die Wandstärke des hohlzylindrischen Dauermagneten bei gleich bleibendem Außendurchmesser vergrößert werden kann, wodurch eine größere magnetische Feldstärke zur Verfügung steht und damit eine höhere Leistungsabgabe des Generators erzielt werden kann.

Der Durchmesser des zweiten, dünneren Wellenabschnitts beträgt bevorzugt etwa 2 - 2,5 mm, besonders bevorzugt etwa 2,35 mm. Durch diese Abmessung kann einerseits die Wandstärke des Magnetelements so vergrößert werden, dass es zu einer Steigerung der Leistungsabgabe des Generators kommt, andererseits ist jedoch auch noch eine ausreichend hohe mechanische Festigkeit des zweiten Wellenabschnitts gegeben, so dass keine Gefahr besteht, dass der zweite Wellenabschnitt insbesondere bei der Übertragung von höheren Drehmomenten verbogen wird oder bricht.

Ein weiteres Problem dieses Generators besteht darin, dass bei Betrieb des Generators auf das Magnetelement eine Kraftwirkung in Richtung von Stellen mit besonders hoher Magnetfelddichte ausgeübt wird, zum Beispiel in Richtung der Polschuhe des Stators. Durch diese Kraftwirkung wird periodisch die Winkelgeschwindigkeit beeinflusst, wodurch Resonanzen oder Vibrationen hervorgerufen werden, die insbesondere bei Betrieb des Handgriffelements mit höheren Drehzahlen die Laufruhe der Welle, auf der das Magnetelement angeordnet ist, negativ beeinflussen. Ist diese Welle zum Beispiel über Zahnräder mit einer weiteren Welle verbunden, so führen diese Resonanzen und Vibrationen zu einem schlechteren Eingreifen der Zahnelemente der Zahnräder, so dass in unerwünschter Weise die Lärmentwicklung und der Verschleiß der Zahnräder während des Betriebs des Handgriffelements steigen. Um diese negativen Auswirkungen möglichst gering zu halten, wird daher in einer zweiten Ausführungsform die zumindest eine Welle des Triebelements, an der das Magnetelement befestigt ist, an zwei Lagerstellen gelagert und das Magnetelement zwischen diesen beiden Lagerstellen angeordnet. Bevorzugt sind die beiden Lagerstellen, die insbesondere durch zwei Kugellager gebildet werden, möglichst nahe am Generator vorgesehen. Die Anordnung des Magnetelements zwischen den Lagerstellen stabilisiert den Rotor und verringert die Ausbildung der Resonanzen und Vibrationen.

Die Handgriffelemente des zweiten Ausführungsbeispiels werden in höheren Antriebsdrehzahlbereichen betrieben, vorzugsweise im Bereich zwischen 20.000 bis 50.000 Umdrehungen pro Minute, wobei oftmals die Betriebszeit länger ist als bei den oben beschriebenen chirurgischen Handgriffelementen. Die Folge kann eine stärkere Erwärmung des Generators sein, so dass Maßnahmen geschaffen werden müssen, um diese Wärme abzuleiten, da es ansonsten zu einer übermäßigen, für den Anwender unangenehmen Erwärmung der Griffhülse des Handgriffelements kommen kann.

In einem dritten Ausführungsbeispiel ist das Handgriffelement mit einer Kühlvorrichtung zur Ableitung von vom Generator erzeugter Wärme versehen. Die Kühlvorrichtung kann zum Beispiel aktive oder passive Kühlkörper, Wärmerohre (so genannte 'heat pipes') mit einem im Inneren enthaltenen, verdampfenden und kondensierenden Wärmeübertragungsmedium, Wärmeleitpasten oder -pads oder andere bekannte wärmeleitende Vorrichtungen umfassen. Nachteil dieses Ausführungsbeispiel ist, dass zusätzliche Kühlvorrichtungen oder Kühlelemente im Handgriffelement anzuordnen sind, wobei Insbesondere in dentalen Handgriffelementen für die Aufnahme zusätzlicher Bauteil neben dem Generator kaum Platz vorhanden ist.

In einer vierten, bevorzugten Ausführungsform sind daher das Handgriffelement oder Teile davon so ausgebildet, dass sie die Wärmeableitung vom Generator begünstigen oder selbst Wärme ableiten. Insbesondere ist die Kupplungsvorrichtung des Handgriffelements oder Teile davon, zum Beispiel das Aufnahmeelement oder das Kupplungsrohr, direkt oder indirekt mit dem Generator verbindbar oder verbunden, so dass dem Generator ein Kühlmedium über die Kupplungsvorrichtung zuführbar ist. Als Kühlmedium kann bevorzugt ein unter Druck stehendes Gas verwendet werden, insbesondere Druckluft, die von der Antriebseinheit, zum Beispiel von deren Kupplungselement in das Aufnahmeelement übertritt. Wird als Antriebseinheit zum Beispiel ein mit Luft gekühlter Elektromotor oder ein mit Druckgas betriebener Motor verwendet, so kann in vorteilhafter Weise zumindest ein Teil dieses Kühlluft- oder Druckgasstroms auch für die Kühlung des Generators verwendet werden. Besonders bevorzugt ist zumindest ein Luftspalt des Generators mit der Kupplungsvorrichtung verbindbar oder verbunden, so dass die Wärmeabfuhr durch das Kühlmedium auch aus dem Inneren des Generators erfolgt. Alternativ oder zusätzlich kann das Kühlmedium auch an den Außenseiten des Generators vorbeigeleitet werden.

Alternativ oder zusätzlich kann die Kupplungsvorrichtung, insbesondere das Aufnahmeelement selbst zur Wärmeableitung verwendet werden. Der Generator steht hierzu mit dem Aufnahmeelement oder einem Fortsatz des Aufnahmeelements direkt oder indirekt in Verbindung oder ist bevorzugt teilweise oder vollständig davon umgeben, so dass vom Generator erzeugte Wärme auf das Aufnahmeelement übertragen und von diesem abgeleitet wird. Das Aufnahmeelement und / oder dessen Fortsatz sind des Weiteren bevorzugt von der Außenhülse des Handgriffelements beabstandet, zum Beispiel durch einen Luftspalt, so dass die Wärmeübertragung auf die Außenhülse, die mit dem Anwender oder Patienten in Berührung kommt, zusätzlich verringert wird.

Ist in dem Handgriffelement zumindest eine Medienleitung vorgesehen, durch die zum Beispiel ein Behandlungs- oder Kühlmedium wie Wasser oder ein Wasser-Luftgemisch geleitet wird, dann kann zusätzlich oder alternativ diese Medienleitung so am Generator vorbeigeleitet werden, dass sie und das in ihr enthaltene Medium zumindest einen Teil der vom Generator erzeugten Wärme aufnimmt und ableitet. Bevorzugt kann die Medienleitung im Bereich des Generators eine vergrößerte Oberfläche oder zusätzliche Windungen für einen erhöhten Wärmeübergang aufweisen.

Der Gesamtdurchmesser der beschriebenen Generatoren liegt, bedingt durch ihren Aufbau, unter etwa 15 mm, bevorzugt unter etwa 12 mm, besonders bevorzugt bei etwa 11 mm. Der Gesamtdurchmesser des Generators ist für den Einbau in ein medizinisches, insbesondere dentales Handgriffelement von sehr großer Bedeutung, da möglichst eine Vergrößerung des Durchmessers des Handgriffelements verhindert werden soll, wodurch sich die Handhabbarkeit des Handgriffelements für den Anwender deutlich verschlechtern und Ermüdungserscheinungen der Hand schneller hervorgerufen werden würden.

Um eine Übertragung von Keimen zwischen Patienten zu vermeiden, ist es notwendig, die Handgriffelemente nach jeder Behandlung zu sterilisieren. Dazu gibt es unterschiedliche Sterilisationsverfahren, zum Beispiel Dampfsterilisation, chemische Sterilisation oder Sterilisation mit Hitze. Wird ein Generator in ein Handgriffelement integriert, so ist es notwendig, den Generator so auszubilden, dass er den während der unterschiedlichen Sterilisationsverfahren herrschenden Bedingungen über die gesamte Dauer des Sterilisationsprozesses ohne Verlust seiner Funktionsfähigkeit widersteht, d.h. dass der Generator sterilisierbar ausgebildet ist. Insbesondere muss der Generator das mehrmaliges Einbringen in eine Umgebung mit Temperaturen von zumindest 120°C, bevorzugt von 130°C, besonders bevorzugt von 134°C, und / oder mit Wasserdampf oder mit Chemikalien oder Gasen, insbesondere Desinfektionsmittel und / oder mit Druckschwankungen von etwa 1 bar unbeschadet übersteht.

Dazu werden in einem weiteren bevorzugten Ausführungsbeispiel für bestimmte Bauteile der Generatoren, zum Beispiel für zumindest Teile des Rotors und / oder für zumindest ein Magnetflusselement Stähle verwendet, insbesondere härtbare oder gehärtete Stähle. Bei der Verwendung von Stählen für ein Magnetflusselement müssen diese Stähle auch eine ausreichende magnetische Leitfähigkeit aufweisen. Die Härtung der Stähle kann durch unterschiedliche Verfahren erreicht werden, zum Beispiel durch Vergüten unter Vakuum oder unter Schutzgasatmosphäre. Alternativ können die Stähle mit Beschichtungen versehen werden, zum Beispiel mit Nickel-, Chrom-, Nickel-Chrom oder Kunststoff, insbesondere Teflonbeschichtungen. Auch das Magnetelement muss sterilisierbar ausgebildet sein. Dies kann entweder durch die Verwendung korrosionsbeständig Magnetmaterialien, zum Beispiel von Samariumkobalt, durch Beschichten des Magnetelements, zum Beispiel mit Nickel oder Kunststoffen, insbesondere mit Teflon oder durch Einhausen des Magnetelements, zum Beispiel in ein korrosionsbeständiges Stahlgehäuse erfolgen. Um die Spulendrähte sterilisierbar zu machen, können diese mit temperatur- und/oder chemikalienbeständigen Isolierungen versehen, aus Lackdrähten hergestellt oder beschichtet sein. Bevorzugt sind der gesamte Stator oder zumindest die Spulen auch mit temperatur- und/oder chemikalienbeständigen Materialien vergossen, zum Beispiel mit Kunstharzen, insbesondere mit Epoxydharz.

Durch diesen Aufbau kann der Generator mit dem Handgriffelement sterilisiert werden. Der Anwender ist somit nicht gezwungen, den Generator vor dem Sterilisieren aus dem Handgriffelement zu entnehmen. Ein weiterer Vorteil der Verwendung von härtbaren bzw. gehärteten Stählen für Bauteile des Generators sind ihre hohe mechanische Belastbarkeit und die ausgezeichneten Materialpaarungseigenschaften. Dadurch wird es möglich, den Rotor koaxial mit und direkt auf der Welle des Triebelements anzuordnen, den Rotor einstückig mit der Welle auszubilden oder auf dem Rotor oder der Rotorwelle weitere Bauteile, insbesondere Getriebeelemente wie Zahnräder zu befestigen.

Die Erfindung wird nachfolgend anhand bevorzugter Ausführungsbeispiele und Bezug nehmend auf die beigefügten Zeichnungen erläutert:
Figur 1 zeigt ein Ausführungsbeispiel eines medizinischen, insbesondere dental-chirurgischen Handgriffelements mit einem Generator.
Figur 2 zeigt eine vergrößerte Darstellung des Generators des Handgriffelements aus Figur 1.
Figuren 3A und 3B zeigen eine alternative Ausführungsform des Stators des Generators aus Figur 1.
Figur 4 zeigt einen Schnitt durch den Generator entlang der Linie IV - IV der Figur 1 mit einem vergrößerten Ausschnitt eines Teils des Rotors und Stators des Generators.
Figur 5 zeigt ein Diagramm mit Messwerten der Klemmenspannung und der abgegebenen Leistung eines Generators gemäß Figur 2.
Figur 6 Figur 1 zeigt ein Ausführungsbeispiel eines medizinischen, insbesondere dentalen Handgriffelements mit einem Generator.
Figur 7 zeigt ein Diagramm mit Messwerten der Klemmenspannung und der abgegebenen Leistung eines Generators gemäß Figur 6.

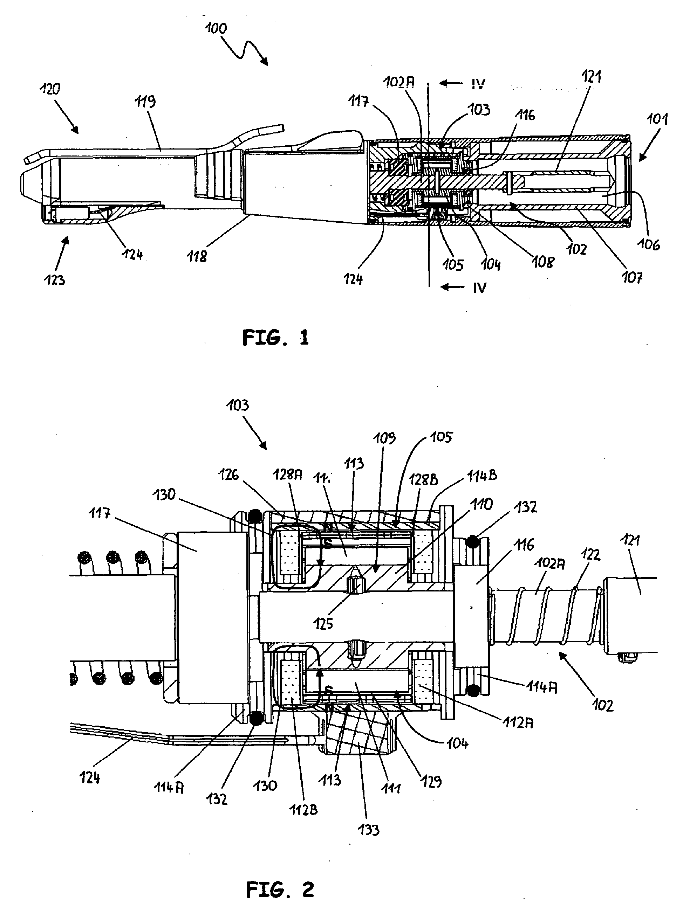

Das in Figur 1 dargestellte medizinische Handgriffelement 100 ist für chirurgische, insbesondere dental-chirurgische Anwendungen ausgebildet. Es umfasst einen länglichen, geraden Körper mit einer ein- oder mehrteiligen Außenhülse 118. An der Außenhülse 118 ist ein Rohr 119 befestigt, das mit einer Flüssigkeitsquelle verbindbar ist und über das die Flüssigkeit zur Kühlung und Spülung der Behandlungsstelle abgegeben werden kann. Selbstverständlich kann das chirurgische Handgriffelement auch andere Außenformen, insbesondere zueinander gewinkelt angeordnete Abschnitte oder eine pistolenförmige Gestalt aufweisen.

Im Vorderbereich oder Kopfabschnitt 120 des Handgriffelements 100 befindet sich in bekannter Weise eine Werkzeugaufnahme, in die ein Behandlungswerkzeug lösbar einsetzbar ist. Die Werkzeugaufnahme ist mit dem Triebelement 102 verbunden, so dass eine Antriebsbewegung, insbesondere eine Drehbewegung von der Antriebseinheit (nicht dargestellt) auf die Werkzeugaufnahme übertragbar ist. Das Triebelement 102 umfasst zumindest eine in Rotation versetzbare Welle 102A, es kann jedoch auch mehrere Wellen oder Wellenabschnitte umfassen, die über Zahnräder oder Über- oder Untersetzungsgetriebe miteinander verbunden sind.

Die Verbindung zwischen dem Handgriffelement 100 und der Antriebseinheit erfolgt über eine lösbare Kupplungsvorrichtung 101, die bevorzugt als Steckkupplung oder Steckdrehkupplung ausgebildet ist. Als Antriebseinheit kann zum Beispiel ein Luftmotor oder ein Elektromotor, insbesondere ein bürstenlosern Elektromotor dienen. Die Antriebseinheit kann direkt an das Handgriffelement 100 angeschlossen sein, sie kann jedoch auch indirekt über ein oder mehrere Zwischenstücke, wie zum Beispiel Adapter oder Kupplungen mit dem Handgriffelement 100 verbunden sein. Die Kupplungsvorrichtung 101 umfasst ein Aufnahmeelement 106, das zum Beispiel als zylindrisches Kupplungsrohr 107 ausgebildet ist, zur Aufnahme eines Kupplungsgegenstücks. Im Inneren des Aufnahmeelements 106 ist zumindest ein Teil der Welle 102A aufgenommen, an den ein Mitnehmer 121 anschließt, der verschiebbar und über eine Feder 122 (siehe Figur 2) vorgespannt mit der Welle 102A verbunden ist.

Das Kupplungsrohr 107 weist einen Fortsatz 108 auf, der zum Beispiel als zylindrische Hülse ausgeformt sein kann. An das Aufnahmeelement 107 schließt, zumindest teilweise im Fortsatz 108 aufgenommen und / oder daran befestigt, ein Generator 103 zur Wandlung mechanischer in elektrische Energie an. Der Generator 103 umfasst einen Rotor 104 und einen Stator 105. Der Generator 103 wird von der in Rotation versetzbaren Welle 102A des Triebelements 102 durchsetzt, wobei der Rotor 104 mit der Welle 102A direkt oder indirekt verbunden ist, so dass er durch die Welle 102A antreibbar ist. Der Generator 103 und insbesondere der Rotor 104 sind koaxial zur Welle 102A angeordnet. Zwei Lager 116, 117, die bevorzugt als Kugellager ausgebildet sind, lagern die Welle 102A und den Rotor 104. Die Kugellager können zum Beispiel als Stahl-, Keramik- oder Hybridkugellager mit keramischen Bauteilen ausgebildet sein. Der Rotor 104 ist bevorzugt zwischen den beiden Lagerstellen 116, 117 angeordnet, wodurch eine möglichst hohe Stabilität erreicht wird, so dass trotz der sehr geringen Abmessungen der Luftspalten 128A, 128B, 129 gewährleistet ist, dass der Rotor 104 den Stator 105 nicht berührt.

Im Handgriffelement 100 ist des Weiteren eine Beleuchtungsvorrichtung 123 zur Abgabe von Strahlung auf die Behandlungsstelle vorgesehen. Die von der Beleuchtungsvorrichtung 123 emittierte Strahlung kann insbesondere für den Menschen sichtbare Wellenlängen aufweisen, sie kann jedoch je nach Anwendung auch teilweise oder vollständig andere Wellenlängen abgeben. Bevorzugt umfasst die Beleuchtungsvorrichtung 123 zumindest ein optisches Halbleiterelement, zum Beispiel eine Leuchtdiode. Bevorzugt ist die Beleuchtungsvorrichtung hermetisch gekapselt, so dass ein von der Umgebung vollständig abgeschlossener Innenraum entsteht, in dem das optische Halbleiterelement aufgenommen ist. Durch diese Maßnahme ist auch die Beleuchtungsvorrichtung 123 sterilisierbar.

Die Beleuchtungsvorrichtung 123 ist mit dem Generator 103 elektrisch verbunden. Über zwei elektrische Leitungen 124 wird zumindest ein Teil des vom Generator 103 erzeugten Stroms der Beleuchtungsvorrichtung 123 zugeführt, so dass diese, sobald die Welle 102A und damit der Rotor 104 des Generators 103 in Bewegung versetzt werden, Strahlung abgibt. Die Beleuchtungsvorrichtung 123 ist am Kopfabschnitt 120 des Handgriffelements 100 angeordnet, so dass ihre Strahlung direkt, ohne Zwischenschaltung optischer Elemente wie Lichtleiter oder Linsen in Richtung der Behandlungsstelle und des Werkzeugs abgegeben werden kann. Alternativ ist es jedoch genauso möglich, die Beleuchtungsvorrichtung im Inneren des Handgriffelements 100 oder in einem vom Kopfabschnitt entfernten Teil des Handgriffelements 100 anzuordnen, und wenn nötig die Strahlung über optische Elemente wie Glasstäbe, Glasfaserstäbe oder Linsen zum Kopfabschnitt 120 des Handgriffelements 100 zu führen, von wo sie in Richtung der Präparationsstelle abgestrahlt wird.

Für Reinigungszwecke ist das chirurgische Handgriffelement 100 in mehrere Einzelteile zerlegbar. Um die Teile des Handgriffelements 100 vollständig voneinander trennen zu können, ist es daher nötig, auch die elektrische Verbindung zwischen dem Generator 103 und dem oder den angeschlossenen Verbrauchern, zum Beispiel der Beleuchtungsvorrichtung 123 trennbar auszuführen. Dies kann zum Beispiel durch das Einfügen elektrischer Steckkontakte oder Schleifkontakte in die elektrische Verbindung zwischen dem Generator 103 und dem Verbraucher erfolgen.

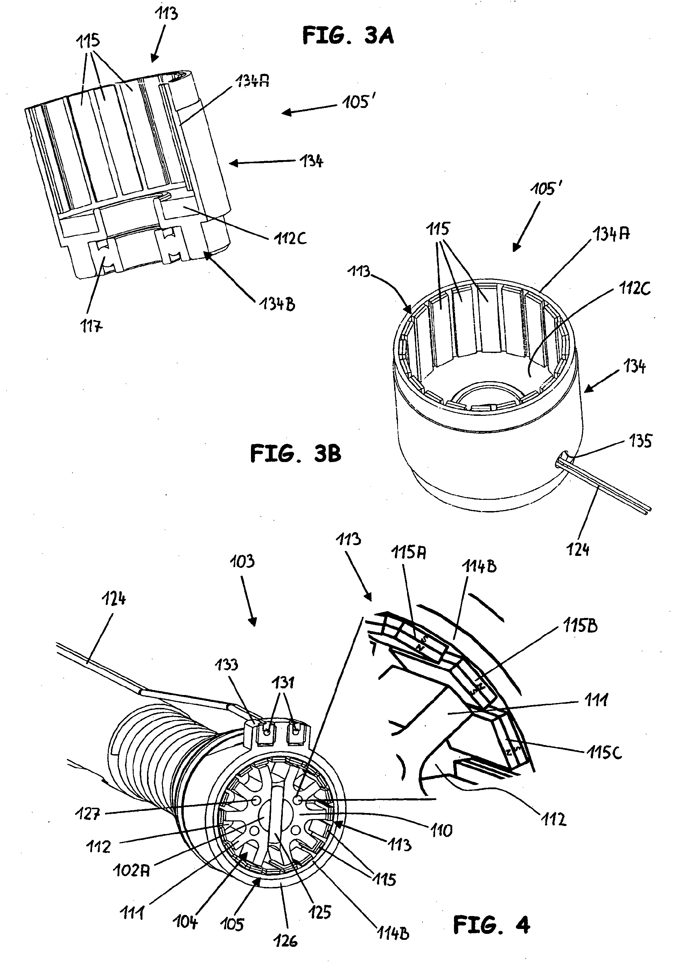

In den Figuren 2 und 4 sind der Aufbau des Generators 103 und seine Integration in das Handgriffelement 100 im Detail dargestellt. Der Rotor 104 des Generators 103 umfasst ein Magnetflusselement 109, das bevorzugt einen zentralen Körper 110 aufweist, von dem radial mehrere Fortsätze 111 abstehen, die durch Zwischenräume 112 voneinander getrennt sind. Der Körper 110 und die Fortsätze 111 des Magnetflusselements 109 sind aus magnetisch leitendem Material hergestellt. In den Zwischenräumen 112 befindet sich kein magnetisch leitendes Material. Bevorzugt sind die Fortsätze 111 regelmäßig, rotationssymmetrisch um den zylindrischen Körper 110 angeordnet. Die Fortsätze 111 können zum Beispiel als Schaufeln oder Flügeln ausgebildet sein. Der Körper 110 ist von einer Bohrung durchsetzt, durch die die Welle 102A des Triebelements 102 verläuft. Rotor 104 ist fest mit der Welle 102A verbunden, zum Beispiel durch verkleben, verpressen oder über einen Stift 125. Alternativ kann der Rotor 104 auch einstückig mit der Welle 102A hergestellt sein.

Der Stator 105 des Generators 103 umfasst zwei Spulen 112A, 112B, ein Magnetelement 113 und zwei weitere Magnetflusselemente 114A, 114B. Zumindest um Teile des Stators 105 ist ein elektrischer Isolator 126 vorgesehen, der zum Beispiel aus Kunststoff gefertigt ist und bevorzugt hülsenförmig ausgebildet ist. Der Stator 105 und der Isolator 126 erstrecken sich koaxial um die Welle 102A. Die Anzahl der Dauermagnete 115 des Magnetelements 113 ist doppelt so groß ist wie die Anzahl der radialen Fortsätze 111 des Magnetflusselements 109. Die Spulen 112A, 112B sind im Wesentlichen zylindrisch geformt, wobei ihre Höhe, d.h. die Ausdehnung in axialer Richtung, geringer ist als ihre Breite, d.h. der Durchmesser in radialer Richtung. Die Spulen 112A, 112B weisen eine zentrale Bohrung auf, durch welche sich die Welle 102A erstreckt und in die zumindest Teile des Rotors 104 und Teile des Magnetflusselements 114B ragen.

Wie insbesondere aus Figur 4 zu erkennen ist, besteht das Magnetelement 113 aus zwanzig Einzelmagneten 115, die rotationssymmetrisch um die Welle 102A angeordnet sind. Neben einander angeordnete Einzelmagnete 115 weisen eine abwechselnde Polung auf, dies bedeutet, dass, wie insbesondere aus dem vergrößerten Ausschnitt der Figur 4 erkennbar ist, bei einem Einzelmagneten 115B der Nordpol und bei den beiden benachbarten Einzelmagneten 115A, 115C der Südpol in Richtung des Magnetflusselements 114B weist. Einander gegenüberliegende Einzelmagnete 115 weisen die gleiche Polung auf, es weisen somit jeweils die gleichen Pole zueinander, in Richtung der Welle 102A bzw. zum Magnetflusselement 114B. Das Magnetelement 113 ist axial durch die Luftspalte 128A, 128B von den Spulen 112A, 112B getrennt. Ein weiterer radialer Luftspalt 129 trennt das Magnetelement 113 vom Rotor 104.

Das Magnetelement 113 und die Spulen 112A, 112B sind axial bzw. radial von zwei aus magnetisch leitendem Material bestehenden Magnetflusselementen 114A, 114B umgeben. Die Magnetflusselemente 114A, 114B bewirken den Rückschluss der Magnetlinien rund um und durch die Spulen 112A, 112B, so wie dies in der Figur 2 schematisch durch die Linien 130 dargestellt ist. Am Magnetflusselement 114B sind die Magnetelemente 115 befestigt, zum Beispiel mit Kunstharz, insbesondere mit Epoxydharz verklebt. Die Magnetflusselemente 114A, 114B weisen jeweils eine Bohrung auf, durch die die Welle 102A hindurchtreten und in die zumindest Teile des Rotors 104 hineinragen.

In Figur 4 ist eine Stellung des Rotors 104 relativ zu den Magnetelementen 115 dargestellt, in der jeweils ein Magnetelement 115, zum Beispiel Magnetelement 115B in dem vergrößerten Ausschnitt, frontal einem der Fortsätze 111 gegenübersteht, wobei sich die beiden benachbarten Magnetelemente 115A, 115C in den Zwischenräumen 112 befinden. Alle Fortsätze 111 stehen somit nur Magnetelementen 115 mit gleicher Polung gegenüber. Wird der Rotor 104 durch die Welle 102A in Drehung versetzt, so bewegen sich die Fortsätze 111 weiter, bis sie dem nächsten, entgegengesetzt gepolten Magnetelement 115, zum Beispiel Magnetelement 115C, frontal gegenüberstehen. In diesen beiden Frontalstellungen wird die größtmögliche Spannung durch den Rückschluss der Magnetlinien rund um und durch die Spulen 112A, 112B induziert. In einer während der Rotation des Rotors 104 eingenommenen Zwischenstellung, in der sich die Fortsätze 111 zwischen zwei Magnetelementen 115 befinden, wird keine Spannung induziert, da die Magnetlinien nicht über die Magnetflusselemente 114A, 114B durch die Spulen 112A, 112B gelenkt werden. Durch die Rotation des Rotors 104 entstehen somit wechselnde magnetische Felder, so dass der Generator 103, angetrieben durch das Triebelement 102, eine Wechselspannung erzeugt, die einen im Wesentlichen sinusförmigen Verlauf aufweist.

Der vom Generator 103 erzeugte Strom wird über die freien Enden der Spulen 112A, 112B elektrischen Kontaktelementen 131 und den Leitungen 124 zugeführt, so dass ein an die Leitungen angeschlossener oder anschließbarer Verbraucher, zum Beispiel Beleuchtungsvorrichtung 123, mit Strom versorgt wird. Die Kontaktelemente 131 sind in einem Gehäuse 133 eingeschlossen, das bevorzugt als Teil der Isolatorhülse 126 ausgebildet ist.

In Figur 4 sind des Weiteren vier Bohrungen 127 zu erkennen, die sich axial durch den Körper 110 des Magnetflusselements 109 erstrecken. Diese Bohrungen 127, deren Anzahl, Form und Durchmesser selbstverständlich variabel sind, dienen der Weiterleitung von Schmiermittel für im Handgriffelement 100 angeordnete Bauteile wie Lager oder Getriebe. Die Schmiermittel werden unter Druck in die das Aufnahmeelement 106 der Kupplung 101 eingebracht und durchströmen das Lager 116, die Bohrungen 127, das Lager 117 und daran anschließende Bauteile des Handgriffelements 100 bis zum Kopfabschnitt 120.

Die Magnetflusselemente 114A übernehmen zusätzlich mehrere Lagerfunktionen, wodurch ein kompakter Aufbau des Generators 103 und ein Platz sparender Einbau in das Handgriffelement 100 möglich ist. In einer ersten und zweiten Lagerstelle, die zum Beispiel als Rücksprung oder Schulter ausgebildet sein können, sind die Lager 116, 117 zumindest teilweise aufgenommen, wobei bevorzugt die Lager 116, 117 sowohl den Rotor 104 und als auch die zumindest eine Welle 102A des Triebelements 102 drehbar lagern. Eine dritte und vierte Lagerstelle des Magnetflusselements 114A, die zum Beispiel als Vorsprung, Schulter oder Flansch ausgebildet sein können, nehmen zumindest Teile des Stators 105, insbesondere die Spulen 112A, 112B auf. Bevorzugt sind die Spulen 112A, 1128 zusätzlich mit dem Magnetflusselement 114A verklebt oder vergossen, zum Beispiel mit Kunstharz, insbesondere mit Epoxydharz. Schließlich sind noch Anlageflächen oder Rücksprünge für O-Ringe 132 vorgesehen, die den Generator 103 im Handgriffelement 100 lagern.

Durch den länglichen, axialen Aufbau des Generators 103 mit den langen, schmalen Magnetelementen 115, die in etwa eine Ausdehnung von 1,2 mm * 0,4 mm * 6,2 mm haben, den axial davor und dahinter angeordneten Spulen 112A, 112B, den axial vor bzw. hinter den Spulen 112A, 112B angeordneten Magnetflusselementen 114A und dem ebenfalls axial langen und radial schmalen, hülsenförmigen Magnetflusselement 114B ist in vorteilhafter Weise ein Generator geschaffen, der in das Handgriffelement 100 einbaubar ist, ohne dass eine übermäßige Vergrößerung des Durchmessers des Handgriffelements 100 erfolgt, und der eine für die Versorgung des Verbrauchers, insbesondere der Beleuchtungsvorrichtung 123 ausreichende Leistung erbringt.

In den Figuren 3A und 3B ist eine alternative Ausführungsform eines Stators des Generators 103 dargestellt. Bei diesem Stator 105' ist das Magnetflusselement 134 einteilig ausgebildet, es sind also der radiale, hülsenförmige Abschnitt 134A, der den Rotor umgibt, und der axial vor dem Rotor angeordnete Abschnitt 134B aus einem Stück hergestellt. Die Einzelmagnete 115 sind wiederum rotationssymmetrisch an der Innenseite des radialen Abschnitts 134A befestigt. Die einzige Spule 112C ist in einer Aufnahme des Magnetflusselements 134 eingesetzt und bevorzugt darin vergossen. Das Magnetflusselement 134 und die Spule 112C weisen jeweils eine Bohrung auf, durch die die Welle 102A des Triebelements 102 hindurchtreten kann und in die zumindest Teile des Rotors ragen. Der axiale Abschnitt 134B übernimmt wiederum zusätzlich die Funktion eines Lagersitzes für das Lager 117. Im Magnetflusselement 134 ist eine radiale Bohrung 135 vorgesehen, durch die die elektrischen Leitungen 124 zur Verbindung mit dem Verbraucher treten. Der Vorteil des Stators 105' liegt in seinem kompakteren Aufbau und dem dadurch vereinfachten Einbau in den Generator 103 und das Handgriffelement 100.

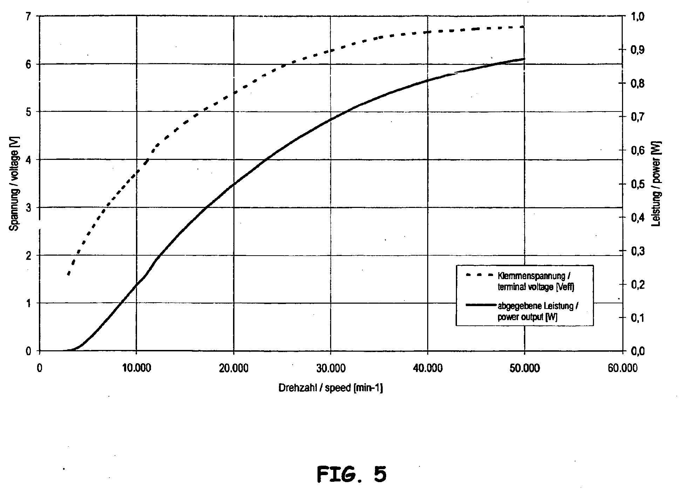

Figur 5 zeigt ein Diagramm mit Messwerten der Klemmenspannung und der abgegebenen Leistung des Generators 103, die bei unterschiedlichen Drehzahlen von 3.000 bis 50.000 Umdrehungen pro Minute bestimmt wurden. Als Verbraucher war bei den Messungen eine Leuchtdiode an den Generator angeschlossen. Sowohl die Spannungs- als auch die Leistungskurve weisen im unteren Drehzahlbereich von etwa 3.000 Umdrehungen pro Minute bis in den mittleren Drehzahlbereich von etwa 25.000 Umdrehungen pro Minute einen in etwa linearen Anstieg auf. Im anschließenden Drehzahlbereich von über etwa 25.000 Umdrehungen pro Minute flacht der Anstieg beider Kurven ab. Der Generator 103 weist damit ein für chirurgische, insbesondere dental-chirurgische Anwendung optimales Leistungsverhalten auf.

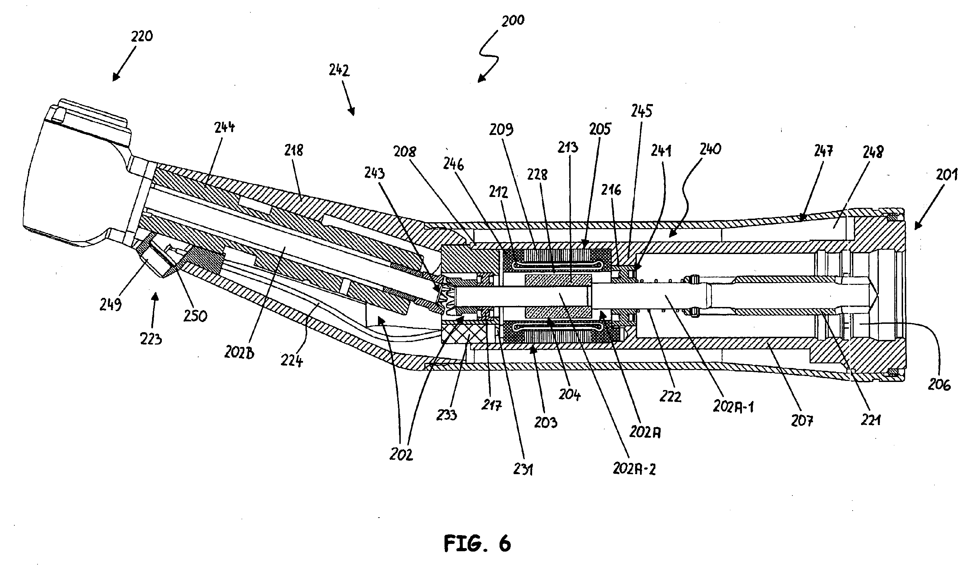

Das in Figur 6 dargestellte medizinische, insbesondere dental-medizinische Handgriffelement 200 umfasst einen Kopfabschnitt 220 und einen daran anschließenden, länglichen Griffabschnitt 242. Das Handgriffelement 200 ist als so genanntes Winkelstück ausgebildet, bei dem der Griffabschnitt 242 aus zwei zueinander gewinkelt angeordnete Teilen besteht und bei dem die Werkzeugöffnung seitlich am Kopfabschnitt 220 angeordnet ist, so dass ein Behandlungswerkzeug quer zum Griffabschnitt 242 in den Kopfabschnitt 220 einsetzbar ist. Eine mehrteilige Außenhülse 218 umgibt den Griff- und den Kopfabschnitt 220. Selbstverständlich kann das Handgriffelement auch andere Außenformen, insbesondere eine gerade oder eine pistolenförmige Gestalt aufweisen.

Im Vorderbereich oder Kopfabschnitt 220 des Handgriffelements 200 befindet sich in bekannter Weise eine über die Werkzeugöffnung zugängliche Werkzeugaufnahme. Die Werkzeugaufnahme kann zumindest teilweise in einer Hohlwelle aufgenommen sein, die beweglich gelagert ist, insbesondere durch zwei Kugellager. Auf der Hohlwelle ist ein Zahnrad vorgesehen, das mit einem Ritzel oder Zahnrad des Triebelements 202 kämmt, so dass die Antriebsbewegung vom Triebelement 202 auf die Hohlwelle übertragbar ist und die Hohlwelle gemeinsam mit der Werkzeugaufnahme in Drehbewegung versetzbar ist. Selbstverständlich können auch andere Mechanismen, zum Beispiel Exzenter, vorgesehen sein, die die Werkzeugaufnahme in andere Arbeitsbewegungen versetzen, zum Beispiel in eine Hub-, Taumel- oder Oszillationsbewegung.

Der Griffabschnitt 242 wird von dem Triebelement 202 durchsetzt, wobei das Triebelement 202 eine erste Welle 202A und eine zweite Welle 202B umfasst, die über ein Getriebe 243 oder Zahnräder miteinander verbunden sind. Die beiden Wellenteile 202A, 202B sind gewinkelt zueinander angeordnet, entsprechend den beiden gewinkelten Abschnitten des Griffabschnitts 242. Die Welle 202B ist in einer Lagerhülse 244 insbesondere durch Gleitlager drehbar gelagert. Die erste Welle 202A ist näher zur Kupplungsvorrichtung 201 angeordnet als die zweite Welle 202B. An die Welle 202A schließt ein Mitnehmer 221 an, der verschiebbar und über eine Feder 222 vorgespannt mit der Welle 202A verbunden ist.

Die Verbindung zwischen dem Handgriffelement 200 und der Antriebseinheit zum Antrieb der Werkzeugaufnahme und des Werkzeugs erfolgt über eine lösbare Kupplungsvorrichtung 201, die bevorzugt als Steckkupplung oder Steckdrehkupplung ausgebildet ist. Als Antriebseinheit kann zum Beispiel ein Luftmotor oder ein Elektromotor, insbesondere ein bürstenloser Elektromotor verwendet werden. Die Antriebseinheit kann direkt an das Handgriffelement 200 angeschlossen sein, sie kann jedoch auch indirekt über ein oder mehrere Zwischenstücke, wie zum Beispiel Adapter oder Kupplungen mit dem Handgriffelement 200 verbunden sein. Die Kupplungsvorrichtung 201 umfasst ein Aufnahmeelement 206, das zum Beispiel als zylindrisches Kupplungsrohr 207 ausgebildet ist, zur Aufnahme eines Kupplungsgegenstücks. Im Inneren des Aufnahmeelements 206 sind zumindest ein Teil der Welle 202A und der Mitnehmer 221 aufgenommen.

Im Handgriffelement 200 ist ein Generator 203 zur Wandlung mechanischer in elektrische Energie vorgesehen, wobei der Generator 203 durch die Welle 202A des Triebelements 202 antreibbar ist. Der Generator 203 hat eine im Wesentlichen zylindrische Außenform und ist symmetrisch um seine Längsachse aufgebaut. Der Generator 203 und insbesondere sein Rotor 204 sind koaxial mit der Welle 202A angeordnet. Des Weiteren ist der Generator 203 im Wesentlichen um die erste Welle 202A und somit näher zur Kupplungsvorrichtung 201 angeordnet, so dass der Generator 203 einfach auszutauschen ist. Das als zylindrisches Kupplungsrohr 207 ausgebildete Aufnahmeelement 206 weist einen ebenfalls zylindrischen Fortsatz 208 auf, in dem der Generator 203 aufgenommen ist. An einer zwischen dem Aufnahmeelement 206 und dem Fortsatz 208 angeordneten Ringschulter 245 ist eine erste Lagerstelle 216 zur Lagerung der Welle 202A und des Rotors 204 des Generators 203 vorgesehen. Auch die zweite Lagerstelle 217 befindet sich im Fortsatz 208. Zwischen den beiden Lagerstelle 216, 217, die bevorzugt als Kugellager ausgebildet sind, ist der Generator 203 angeordnet.

Der Rotor 204 von Generator 203, der ein Magnetelement 213 in Form eines zweipoligen Dauermagneten umfasst, ist auf der Welle 202 befestigt. Das Magnetelement 213 hat die Form eines Hohlzylinders, dessen Innenbohrung von der Welle 202A durchsetzt wird. Zumindest ein Teil der Welle 202A, insbesondere jener Teil, der sich im Inneren des Magnetelements 213 befindet, ist zum Zweck einer besseren magnetischen Leitfähigkeit aus einem magnetisch leitenden Material hergestellt. Die Welle 202A, auf der das Magnetelement 213 befestigt ist, weist des Weiteren einen ersten Abschnitt 202A-1 mit einem ersten Durchmesser und einen zweiten Abschnitt 202A-2 mit einem zweiten, geringeren Durchmesser auf, wobei das Magnetelement 213 am zweiten Abschnitt 202A-2 befestigt ist. Der Durchmesser des Wellenabschnitts 202A-2 sowie der Innendurchmesser der Innenbohrung des Magnetelements beträgt etwa 2,35 mm. Der Durchmesser des Wellenabschnitts 202A-1 beträgt etwa 3mm. Durch die Verringerung des Durchmessers des Wellenabschnitts 202A-2 ist es möglich, die Wandstärke des Magnetelements 213 auf etwa 1,32 mm zu erhöhen ohne dabei seinen Außendurchmesser von etwa 5 mm zu vergrößern.

Durch einen Luftspalt 228 vom Rotor 204 getrennt umgibt der Stator 205 die Welle 202A ebenfalls koaxial. Der Stator 205 umfasst zumindest eine, bevorzugt mehrere Spulen 212 und ein Magnetflusselement 209, das zum Beispiel als geblechter Eisenrückschluss ausgebildet ist. Der Stator 205 ist mit einem Vergussmaterial 246, insbesondere einem Kunstharz, zum Beispiel Epoxydharz vergossen und von der Umgebung versiegelt, so dass die während eines Reinigungs- oder Steerilisationsverfahrens herrschenden Umgebungsbedingungen den Stator 205 nicht angreifen oder korrodieren können.

Im Handgriffelement 200 ist des Weiteren eine Kühlvorrichtung 240 zum Abführen zumindest eines Teils der vom Generator 203 erzeugten Wärme vorgesehen. Die Kühlvorrichtung 240 umfasst das Aufnahmeelement 206 der Kupplungsvorrichtung 201 sowie den daran anschließenden Fortsatz 208. Der Generator 203 steht in direktem Kontakt mit dem aus einem gut Wärme leitendem Material, insbesondere aus Metall bestehenden Fortsatz 208, so dass die Wärme über den Fortsatz 208 und das Kupplungsrohr 207 vom Generator 203 weggeführt wird.

Die Kühlvorrichtung 240 weist des Weiteren eine Verbindung 241 zwischen der Kupplungsvorrichtung 201, insbesondere dem Aufnahmeelement 206 und dem Generator 203 auf, so dass dem Generator 203 ein Kühlmedium, insbesondere Kühlluft über die Kupplungsvorrichtung 201 zuführbar ist. Bevorzugt verbindet die Verbindung 241 den Luftspalt 228 des Generators 203 mit der Kupplungsvorrichtung 201, so dass Wärme auch aus dem Inneren des Generators abgezogen wird. Die Verbindung zwischen dem Generator 203 und der Kupplungsvorrichtung 201 erfolgt bevorzugt über Spalten oder Freiräume in oder zwischen den Bauteilen des Handgriffelements 200, zum Beispiel durch das Kugellager 216. Dadurch wird eine einfache Konstruktion der Verbindung 241 erreicht und es sind insbesondere keine eigenen Kühlmedienleitungen erforderlich.

Um den Wärmeübergang vom Generator 203 auf die Außenhülse 218 noch weiter zu verringern, sind zwischen dem Generator 203 und der Außenhülse 218 thermische Isolationsmittel 247 vorgesehen. Diese Isolationsmittel 247 können zum Beispiel einen Luftspalt 248 zwischen der Außenhülse 218 und dem Generator 203 umfassen und / oder zwischen der Außenhülse 218 und dem Generator 203 angeordnete Dämmstoffe, zum Beispiel geschäumte Kunststoffe oder organische Dämmstoffe.

Der Generator 203 ist über elektrische Leitungen 224 mit einem Verbraucher, zum Beispiel einer Beleuchtungsvorrichtung 223 verbunden. Der vom Generator 203 erzeugte Strom wird zur Versorgung des Verbrauchers über die freien Enden der beiden Spulen 212 elektrischen Kontaktelementen 231 und den Leitungen 224 zugeführt. Die Kontaktelemente 231 sind bevorzugt in einem Gehäuse 233 eingeschlossen und von der Umgebung hermetisch abgeschlossen, so dass sie den bei der Reinigung oder Sterilisation herrschenden Bedingungen widerstehen können.

Die Beleuchtungsvorrichtung 223 umfasst bevorzugt ein oder mehrere optische Halbleiterelement, zum Beispiel Leuchtdioden. Besonders bevorzugt ist das Halbleiterelement in einer hermetisch verschlossenen Kapsel 249 mit einem von der Umgebung vollständig abgeschlossener Innenraum aufgenommen. Dadurch ist auch die Beleuchtungsvorrichtung 223 sterilisierbar. Die Kapsel 249 weist zumindest an ihrer von dem Handgriffelement 200 weg weisenden Seite einen transparenten Bereich auf, über den das vom Halbleiterelement erzeugte Licht am die Umgebung abgestrahlt werden kann. Die Beleuchtungsvorrichtung 223 ist in einer Öffnung der Außenhülse 218 in der Nähe des Kopfabschnitts 220 aufgenommen bzw. ragt zumindest teilweise aus dieser hervor und ist so ausgerichtet, dass sie ihr Licht in etwa auf die Spitze des Werkzeugs und die Präparationsstelle abgibt. Alternativ kann die Beleuchtungsvorrichtung 223 auch im oder am Kopfabschnitt 220 angebracht sein, bevorzugt rund um die Werkzeugöffnung.

Zur Fixierung im Handgriffelement 200 sind die Kapsel 249 und das Halbleiterelement in einem Halter 250 aufgenommen. In einen mit einem Vergussmaterial, insbesondere Kunstharz wie zum Beispiel Epoxydharz ausgefüllten Innenraum des Halters 250 ragen die elektrischen Kontakte des Halbleiterelements und die damit verbundenen Enden der Leitungen 224. Der Halter 250 ist zum Beispiel durch eine Steckverbindung in der Öffnung der Außenhülse 218 eingesetzt, er kann alternativ oder zusätzlich durch eine Lagerhülse 244 in dieser Öffnung gehalten werden.

Die Kontakte 231 sind bevorzugt lösbar ausgebildet, zum Beispiel als Steckkontakte, so dass der Generator 203 oder die Beleuchtungsvorrichtung 223 zwecks Wartung oder Austausch unabhängig voneinander aus dem Handgriffelement 200 entnommen werden können. Die Entnahme des Generators 203 aus dem Handgriffelement 200 erfolgt durch Lösen und Herausziehen des Kupplungsrohrs 207 und dessen Fortsatz 208 aus der Außenhülse 218 des Handgriffelements 200. Anschließend kann der Generator 203 aus dem Fortsatz 208 entnommen werden. Der Rotor 204 und der Stator 205 sind bevorzugt als voneinander trennbare und damit unabhängig voneinander austauschbare Baueinheiten ausgebildet.

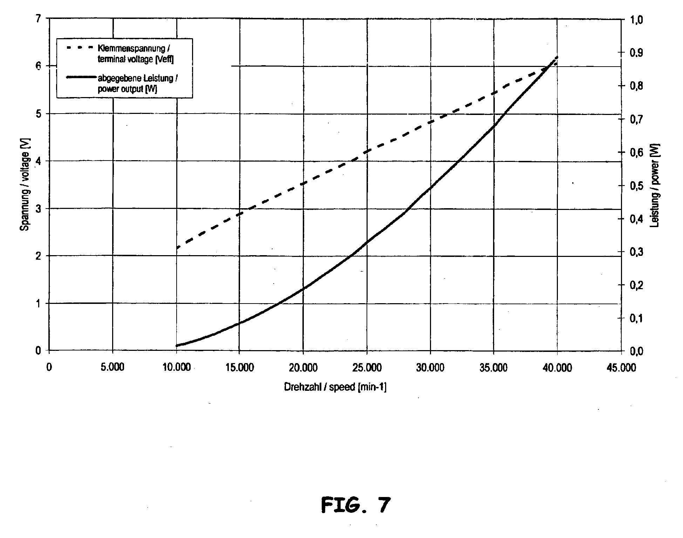

Figur 7 zeigt ein Diagramm mit Messwerten der Klemmenspannung und der abgegebenen Leistung des Generators 203, die bei unterschiedlichen Drehzahlen von 10.000 bis 40.000 Umdrehungen pro Minute bestimmt wurden. Als Verbraucher war bei den Messungen eine Leuchtdiode an den Generator angeschlossen. Sowohl die Spannungs- als auch die Leistungskurve weisen über den gesamten Drehzahlbereich näherungsweise einen linearen Anstieg auf. Ab einem Drehzahlbereich von etwa 20.000 Umdrehungen pro Minute ist die Leistungsabgabe des Generators 203 ausreichend zur Versorgung einer Leuchtdiode.

Die Erfindung ist nicht auf die beschriebenen Ausführungsbeispiele beschränkt, sondern umfaßt alle Ausführungsmöglichkeiten, die das prinzipielle, sinngemäße Funktionsprinzip der Erfindung nicht verändern.

## Patentansprüche

1. Medizinisches, insbesondere dentales, Handstück (100) oder Winkelstück (200), aufweisend: eine Kupplungsvorrichtung (101, 201) zur lösbaren Verbindung des Handstücks (100) oder Winkelstücks (200) mit einer Antriebseinheit, eine mit dem Handstück (100) oder Winkelstück (200) verbundene oder verbindbare Werkzeugaufnahme und ein Triebelement (102, 202) zur Übertragung einer Antriebsbewegung von der Antriebseinheit auf die Werkzeugaufnahme, so dass die Werkzeugaufnahme in eine Arbeitsbewegung versetzbar ist, wobei das Triebelement (102, 202) zumindest eine in Rotation versetzbare Welle (102A, 202A, 202B) umfasst, wobei sich die Werkzeugaufnahme, in die ein Behandlungswerkzeug lösbar einsetzbar ist, in einem Kopfabschnitt (120, 220) des Handstücks (100) oder Winkelstücks (200) befindet, wobei
ein Generator (103, 203) zur Wandlung mechanischer in elektrische Energie vorgesehen ist, wobei der Generator (103, 203) durch die zumindest eine in Rotation versetzbare Welle (102A, 202A, 202B) des Triebelements (102, 202) antreibbar ist und wobei der Generator (103, 203) im Handstück (100) oder Winkelstück (200) zwischen der Kupplungsvorrichtung (101, 201) zur lösbaren Verbindung des Handstücks (100) oder Winkelstücks (200) mit einer Antriebseinheit und dem Kopfabschnitt (120, 220) angeordnet ist, **dadurch gekennzeichnet, dass** der Gesamtdurchmesser des Generators (103, 203) unter 15 mm, bevorzugt unter 12 mm liegt.

2. Handstück (100) oder Winkelstück (200) nach Anspruch 1, **dadurch gekennzeichnet, dass**
der Generator (103, 203) einen Rotor (104, 204) und einen Stator (105, 205) aufweist, wobei zumindest der Rotor (104, 204) koaxial mit der zumindest einen Welle (102A, 202A, 202B) des Triebelements (102, 202) angeordnet ist.

3. Handstück (100) oder Winkelstück (200) nach Anspruch 1 oder 2, **dadurch gekennzeichnet, dass**
das Triebelement (202) eine erste Welle (202A) und eine zweite Welle (202B) umfasst, die miteinander verbunden sind, wobei die erste Welle (202A) näher zur Kupplungsvorrichtung (101, 201) angeordnet ist als die zweite Welle (202B) und wobei der Generator (103, 203) im Wesentlichen um die erste Welle (202A) angeordnet ist.

4. Handstück (100) oder Winkelstück (200) nach einem der vorhergehenden Ansprüche, **dadurch gekennzeichnet, dass**
die Kupplungsvorrichtung (101, 201) ein Aufnahmeelement (106, 206), insbesondere ein Kupplungsrohr (107, 207) zur Aufnahme eines Kupplungsgegenstücks aufweist, wobei der Generator (103, 203) zumindest teilsweise in oder an dem Aufnahmeelement (106, 206) oder in oder an einem Fortsatz (108, 208) des Aufnahmeelements (106, 206) angeordnet ist.

5. Handstück (100) oder Winkelstück (200) nach einem der vorhergehenden Ansprüche, **dadurch gekennzeichnet, dass**
der Generator (103) einen Rotor (104) und einen Stator (105, 105') aufweist, wobei der Rotor (104) ein Magnetflusselement (109) umfasst.

6. Handstück (100) oder Winkelstück (200) nach Anspruch 5, **dadurch gekennzeichnet, dass**
das Magnetflusselement (109) einen zentralen Körper (110) aufweist, von dem radial mehrere Fortsätze (111) abstehen, die durch Zwischenräume (112) voneinander getrennt sind.

7. Handstück (100) oder Winkelstück (200) nach Anspruch 5 oder 6, **dadurch gekennzeichnet, dass**
der Stator (105, 105') zumindest eine Spule (112A, 112B, 112C), ein Magnetelement (113) und bevorzugt zumindest ein weiteres Magnetflusselement (114A, 114B, 134) umfasst.

8. Handstück (100) oder Winkelstück (200) nach Anspruch 7, **dadurch gekennzeichnet, dass**
das Magnetelement (113) mehrere Dauermagnete (115) oder Dauermagnetbereiche aufweist, wobei nebeneinander angeordnete Dauermagnete (115) oder Dauermagnetbereiche eine abwechselnde Polung aufweisen.

9. Handstück (100) oder Winkelstück (200) nach Anspruch 8, **dadurch gekennzeichnet, dass**
die Anzahl der Dauermagnete (115) oder Dauermagnetbereiche doppelt so groß ist wie die Anzahl der radialen Fortsätze (111) des Magnetflusselements (109) des Rotors (104).

10. Handstück (100) oder Winkelstück (200) nach einem der Ansprüche 7, 8 oder 9, **dadurch gekennzeichnet, dass**
das zumindest eine weitere Magnetflusselement (114A, 134) eine Lagerfunktion für den Rotor (104) und die zumindest einen Welle (102A) des Triebelements (102) aufweist.

11. Handstück (100) oder Winkelstück (200) nach einem der Ansprüche 7 bis 10, **dadurch gekennzeichnet, dass**
das zumindest eine weitere Magnetflusselement (114A, 134) eine Lagerfunktion für zumindest Teile des Stators (105), insbesondere der zumindest einen Spule (112A, 112B, 112C), aufweist.

12. Handstück (100) oder Winkelstück (200) nach einem der Ansprüche 1 - 4, **dadurch gekennzeichnet, dass**
der Generator (203) einen Rotor (204) und einen Stator (205) aufweist, wobei der Rotor (204) ein Magnetelement (213) umfasst, das auf der zumindest einen in Rotation versetzbaren Welle (202A, 202B) des Triebelements (202) befestigt ist, und wobei zumindest ein Teil dieser Welle (202A, 202B) aus einem magnetisch leitenden Material hergestellt ist.

13. Handstück (100) oder Winkelstück (200) nach einem der Ansprüche 1 - 4 oder 12, **dadurch gekennzeichnet, dass**
die Welle (202A, 202B), auf der das Magnetelement (213) befestigt ist, einen ersten Abschnitt (202A-1) mit einem ersten Durchmesser und einen zweiten Abschnitt (202A-2) mit einem zweiten, geringeren Durchmesser aufweist, wobei das Magnetelement (213) am zweiten Abschnitt (202A-2) befestigt ist.

14. Handstück (100) oder Winkelstück (200) nach einem der Ansprüche 1 - 4, 12 oder 13, **dadurch gekennzeichnet, dass**
der Generator (203) einen Rotor (204) und einen Stator (205) aufweist, wobei der Rotor (204) ein Magnetelement (213) umfasst, das auf der zumindest einen in Rotation versetzbaren Welle (202A, 202B) des Triebelements (202) befestigt ist, wobei die zumindest eine Welle (202A, 202B) an zwei Lagerstellen (216, 217) gelagert ist und das Magnetelement (213) zwischen diesen beiden Lagerstellen (216, 217) angeordnet ist.

15. Handstück (100) oder Winkelstück (200) nach einem der vorhergehenden Ansprüche, **gekennzeichnet durch**
eine Kühlvorrichtung (240) zur Ableitung von vom Generator (103, 203) erzeugter Wärme.

16. Handstück (100) oder Winkelstück (200) nach Anspruch 15, **dadurch gekennzeichnet, dass**
die Kühlvorrichtung (240) eine Verbindung (241) zwischen der Kupplungsvorrichtung (201), insbesondere dem Aufnahmeelement (206), und dem Generator (203) umfasst, so dass dem Generator (203) ein Kühlmedium über die Kupplungsvorrichtung (201) zuführbar ist.

17. Handstück (100) oder Winkelstück (200) nach Anspruch 16, **dadurch gekennzeichnet, dass**
die Verbindung (241) zumindest einen Luftspalt (228) des Generators (203) mit der Kupplungsvorrichtung (201) verbindet.

18. Handstück (100) oder Winkelstück (200) nach einem der Ansprüche 15 - 17, **dadurch gekennzeichnet, dass**
die Kühlvorrichtung (240) das Aufnahmeelement (206) und / oder zumindest eine Medienleitung umfasst.

19. Handstück (100) oder Winkelstück (200) nach einem der vorhergehenden Ansprüche, **gekennzeichnet durch**
einen Energiespeicher, der mit dem Generator (103, 203) verbunden oder verbindbar ist.

20. Handstück (100) oder Winkelstück (200) nach einem der vorhergehenden Ansprüche, **gekennzeichnet durch**
eine Vorrichtung zum Energieabbau, die mit dem Generator (103, 203) verbunden oder verbindbar ist.

21. Handstück (100) oder Winkelstück (200) nach einem der vorhergehenden Ansprüche, **dadurch gekennzeichnet, dass**
der Generator (103, 203) derart ausgebildet ist, dass er mehrfach sterilisierbar ist.

22. Handstück (100) oder Winkelstück (200) nach einem der vorhergehenden Ansprüche, **dadurch gekennzeichnet, dass**
der Generator (103, 203) mit zumindest einem optischen Halbleiterelement zur Abstrahlung von sichtbarem Licht elektrisch verbindbar oder verbunden ist, so dass das zumindest eine optische Halbleiterelement durch den Generator (103, 203) mit elektrischer Energie versorgbar ist.

## Claims

1. Medical, in particular dental handpiece (100) or contra-angle handpiece (200), comprising: a coupling device (101, 201) for releasable connection of the hand-piece (100) or contra-angle handpiece (200) to a drive unit, a tool receptacle that is or can be connected to the hand-piece (100) or contra-angle handpiece (200) and a drive element (102, 202) for transmitting a driving movement from the drive unit to the tool receptacle so that the tool receptacle can be set in a working movement, wherein the drive element (102, 202) comprises at least one rotatable shaft (102A, 202A, 202B), wherein the tool receptacle into which a treatment tool can be inserted releasably is arranged in a head section (120, 220) of the handpiece (100) or contra-angle handpiece (200), wherein a generator (103, 203) for converting mechanical into electric energy is provided, wherein the generator (103, 203) can be driven by the at least one rotatable shaft (102A, 202A, 202B) of the drive element (102, 202) and wherein the generator (103, 203) is arranged in the handpiece (100) or contra-angle handpiece (200) between the coupling device (101, 201) for releasable connection of the hand-piece (100) or contra-angle handpiece (200) to a drive unit and the head section (120, 220), **characterized in that**
the total diameter of the generator (103, 203) is less than 15 mm, preferably less than 12 mm.

2. Handpiece (100) or contra-angle handpiece (200) according to Claim 1, **characterized in that**
the generator (103, 203) comprises a rotor (104, 204) and a stator (105, 205), wherein at least the rotor (104, 204) is arranged coaxially with the at least one shaft (102A, 202A, 202B) of the drive element (102, 202).

3. Handpiece (100) or contra-angle handpiece (200) according to Claim 1 or 2, **characterized in that**
the drive element (202) comprises a first shaft (202A) and a second shaft (202B) which are connected to one another, wherein the first shaft (202A) is arranged closer to the coupling mechanism (101, 201) than is the second shaft (202B) and wherein the generator (103, 203) is arranged essentially around the first shaft (202A).

4. Handpiece (100) or contra-angle handpiece (200) according to any one of the preceding claims, **characterized in that**
the coupling mechanism (101, 201) comprises a receptacle element (106, 206), in particular a coupling tube (107, 207) to accommodate a coupling counterpart, wherein the generator (103, 203) is arranged at least partially in or on the receptacle element (106, 206) or in or on a protrusion (108, 208) of the receptacle element (106, 206).

5. Handpiece (100) or contra-angle handpiece (200) according to any one of the preceding claims, **characterized in that**
the generator (103) comprises a rotor (104) and a stator (105, 105'), wherein the rotor (104) comprises a magnetic flux element (109).

6. Handpiece (100) or contra-angle handpiece (200) according to Claim 5, **characterized in that**
the magnetic flux element (109) comprises a central body (110) from which several protrusions (111) protrude radially, which are separated from one another by interspaces (112).

7. Handpiece (100) or contra-angle handpiece (200) according to Claim 5 or 6, **characterized in that**
the stator (105, 105') comprises at least one coil (112A, 112B, 112C), a magnetic element (113) and preferably at least one additional magnetic flux element (114A, 114B, 134).

8. Handpiece (100) or contra-angle handpiece (200) according to Claim 7, **characterized in that**
the magnetic element (113) comprises multiple permanent magnets (115) or permanent magnet regions, wherein permanent magnets (115) or permanent magnet regions arranged side-by-side have an alternating polarity.

9. Handpiece (100) or contra-angle handpiece (200) according to Claim 8, **characterized in that**
the number of permanent magnets (115) or permanent magnet regions is twice as great as the number of radial protrusions (111) of the magnetic flux element (109) of the rotor (104).

10. Handpiece (100) or contra-angle handpiece (200) according to any one of Claims 7, 8 or 9, **characterized in that**
the at least one additional magnetic flux element (114A, 134) has a bearing function for the rotor (104) and the at least one shaft (102A) of the drive element (102).

11. Handpiece (100) or contra-angle handpiece (200) according to any one of Claims 7 - 10, **characterized in that**
the at least one additional magnetic flux element (114A, 134) has a bearing function for at least parts of the stator (105), in particular for the at least one coil (112A, 112B, 112C).

12. Handpiece (100) or contra-angle handpiece (200) according to any one of Claims 1 - 4, **characterized in that**
the generator (203) comprises a rotor (204) and a stator (205), wherein the rotor (204) comprises a magnetic element (213) which is attached to the at least one rotatable shaft (202A, 202B) of the drive element (202) and wherein at least a part of this shaft (202A, 202B) is manufactured from a magnetically conductive material.

13. Handpiece (100) or contra-angle handpiece (200) according to any one of Claims 1 - 4 or 12, **characterized in that**
the shaft (202A, 202B), to which the magnetic element (213) is attached comprises a first section (202A-1) having a first diameter and a second section (202A-2) having a second smaller diameter, wherein the magnetic element (213) is attached to the second section (202A-2).

14. Handpiece (100) or contra-angle handpiece (200) according to any one of Claims 1 - 4, 12 or 13, **characterized in that**
the generator (203) comprises a rotor (204) and a stator (205), wherein the rotor (204) comprises a magnetic element (213) which is mounted on the at least one rotatable shaft (202A, 202B) of the drive element (202), wherein the at least one shaft (202A, 202B) is supported on two bearing points (216, 217) and the magnetic element (213) is arranged between these two bearing points (216, 217).

15. Handpiece (100) or contra-angle handpiece (200) according to any one of the preceding claims, **characterized by**
a cooling device (240) for dissipating the heat generated by the generator (103, 203).

16. Handpiece (100) or contra-angle handpiece (200) according to Claim 15, **characterized in that**
the cooling device (240) comprises a connection (241) between the coupling mechanism (201), in particular the receptacle element (206) and the generator (203), so that a cooling medium can be supplied to the generator (203) via the coupling mechanism (201).

17. Handpiece (100) or contra-angle handpiece (200) according to Claim 16, **characterized in that**
the connection (241) connects at least one air gap (228) of the generator (203) to the coupling mechanism (201).

18. Handpiece (100) or contra-angle handpiece (200) according to any one of Claims 15-17, **characterized in that**
the cooling device (240) comprises the receptacle element (206) and/or at least one media line.

19. Handpiece (100) or contra-angle handpiece (200) according to any one of the preceding claims, **characterized by**
an energy storage mechanism which is or can be connected to the generator (103, 203).

20. Handpiece (100) or contra-angle handpiece (200) according to any one of the preceding claims, **characterized by**
a device for dissipation of energy, which is or can be connected to the generator (103, 203).

21. Handpiece (100) or contra-angle handpiece (200) according to any one of the preceding claims, **characterized in that**
the generator (103, 203) is designed so that it can be sterilized repeatedly.

22. Handpiece (100) or contra-angle handpiece (200) according to any one of the preceding claims, **characterized in that**
the generator (103, 203) can be or is electrically connected to at least one optical semiconductor component for emission of visible light, so that the at least one optical semiconductor component can be supplied with electric energy from the generator (103,203).

## Revendications

1. Poignée (100) ou poignée angulaire (200) médicale, en particulier dentaire, comprenant: un dispositif d'accouplement (101, 201) pour le raccordement dissociable de la poignée (100) ou de la poignée angulaire (200) à une unité d'entraînement, un porte-outil raccordé ou pouvant être raccordé à la poignée (100) ou la poignée angulaire (200) et un élément propulseur (102, 202) pour transmettre le mouvement propulsif de l'unité d'entrainement au porte-outil pour pouvoir mettre le porte-outil en mouvement opérationnel, l'élément propulseur (102, 202) comprenant au moins un arbre (102A, 202A, 202B) pouvant être mis en rotation, le porte-outil dans lequel un outil de traitement peut être inséré de manière amovible se trouvant dans une partie sommitale (120, 220) de la poignée (100) ou de la poignée angulaire (200), étant prévu un générateur (103, 203) pour transformer l'énergie mécanique en énergie électrique, le générateur (103, 203) pouvant être entraîné par l'au moins un arbre (102A, 202A, 202B) pouvant être mis en rotation de l'élément propulseur (102, 202) et le générateur (103, 203) étant disposé dans la poignée (100) ou la poignée angulaire (200) entre le dispositif d'accouplement (101, 201) pour permettre un raccordement dissociable de la poignée (100) ou de la poignée angulaire (200) à une unité d'entraînement et à la section sommitale (120, 220), **caractérisée en ce que**
le diamètre total du générateur (103, 203) est inférieur à 15 mm, de préférence inférieur à 12 mm.

2. Poignée (100) ou poignée angulaire (200) selon la revendication 1, **caractérisée en ce que**
le générateur (103, 203) présente un rotor (104, 204) et un stator (105, 205), au moins le rotor (104, 204) étant disposé coaxialement avec l'au moins un arbre (1 02A, 202A, 202B) de l'élément propulseur (102, 202).

3. Poignée (100) ou poignée angulaire (200) selon la revendication 1 ou 2, **caractérisée en ce que**
l'élément propulseur (202) comprend un premier arbre (202A) et un second arbre (202B) qui sont raccordés ensemble, le premier arbre (202A) étant disposé plus près du dispositif d'accouplement (101, 201) que le second arbre (202B) et le générateur (103, 203) étant disposé substantiellement autour du premier arbre (202A).

4. Poignée (100) ou poignée angulaire (200) selon une des revendications précédentes, **caractérisée en ce que**
le dispositif d'accouplement (101, 201) présente un élément récepteur (106, 206), en particulier un tuyau d'accouplement (107, 207) destiné à recevoir une pièce d'accouplement, le générateur (103, 203) étant disposé au moins partiellement dans ou sur l'élément récepteur (106, 206) ou dans ou sur un prolongement (108, 208) des de l'élément récepteur (106, 206).

5. Poignée (100) ou poignée angulaire (200) selon une des revendications précédentes, **caractérisée en ce que**
le générateur (103) comprend un rotor (104) et un stator (105, 105'), le rotor (104) comprenant un élément à flux magnétique (109).

6. Poignée (100) ou poignée angulaire (200) selon la revendication 5, **caractérisée en ce que**
l'élément à flux magnétique (109) présente un corps central (110) d'où dépassent radialement plusieurs prolongements (111) qui sont séparés mutuellement par des intervalles (112).

7. Poignée (100) ou poignée angulaire (200) selon la revendication 5 ou 6, **caractérisée en ce que**
le stator (105, 105') comprend au moins une bobine (112A, 112B, 112C), un élément magnétique (113) et de préférence au moins un autre élément à flux magnétique (114A, 114B, 134).

8. Poignée (100) ou poignée angulaire (200) selon la revendication 7, **caractérisée en ce que**
l'élément magnétique (113) présente plusieurs aimants permanents (115) ou zones magnétiques permanentes, les aimants permanents (115) ou zones magnétiques permanentes mis côte à côte ayant une polarité variable.

9. Poignée (100) ou poignée angulaire (200) selon la revendication 8, **caractérisée en ce que**
le nombre d'aimants permanents (115) ou de zones magnétiques permanentes est le double du nombre de prolongements radiaux (111) de l'élément à flux magnétique (109) du rotor (104).

10. Poignée (100) ou poignée angulaire (200) selon une des revendications 7, 8 ou 9, **caractérisée en ce que**
l'au moins un autre élément à flux magnétique (114A, 134) a une fonction d'appui pour le rotor (104) et l'au moins un arbre (1 02A) de l'élément propulseur (102).

11. Poignée (100) ou poignée angulaire (200) selon une des revendications 7 à 10, **caractérisée en ce que**
l'au moins un autre élément à flux magnétique (114A, 134) a une fonction d'appui au moins pour des parties du stator (105), en particulier l'au moins une bobine (112A, 112B, 112C).

12. Poignée (100) ou poignée angulaire (200) selon une des revendications 1 à 4, **caractérisée en ce que**
le générateur (203) comprend un rotor (204) et un stator (205), le rotor (204) comprenant un élément magnétique (213) qui est fixé sur l'au moins un arbre (202A, 202B) pouvant être mis en rotation de l'élément propulseur (202) et au moins une partie de cet arbre (202A, 202B) étant fabriquée à partir d'un élément conducteur de magnétisme.

13. Poignée (100) ou poignée angulaire (200) selon une des revendications 1 à 4 ou 12, **caractérisée en ce que**
l'arbre (202A, 202B) sur lequel l'élément magnétique (213) est fixé présente une première section (202A-1) ayant un premier diamètre et une seconde section (202A-2) ayant un second diamètre inférieur, l'élément magnétique (213) étant fixé à la seconde section (202A-2).

14. Poignée (100) ou poignée angulaire (200) selon une des revendications 1 à 4, 12 ou 13, **caractérisée en ce que**
le générateur (203) comprend un rotor (204) et un stator (205), le rotor (204) comprenant un élément magnétique (213) qui est fixé sur l'au moins un arbre (202A, 202B) pouvant être mis en rotation de l'élément propulseur (202), l'au moins un arbre (202A, 202B) s'appuyant à deux points d'appui (216, 217) et l'élément magnétique (213) étant disposé entre ces deux points d'appui (216, 217).

15. Poignée (100) ou poignée angulaire (200) selon une des revendications précédentes, **caractérisée par**
un dispositif de refroidissement (240) pour évacuer la chaleur dégagée par le générateur (103, 203).

16. Poignée (100) ou poignée angulaire (200) selon la revendication 15, **caractérisée en ce que**
le dispositif de refroidissement (240) comprenant un raccordement (241) entre le dispositif d'accouplement (201), en particulier l'élément récepteur (206), et le générateur (203) de manière à ce qu'un fluide de refroidissement puisse être acheminé au générateur (203) par l'intermédiaire du dispositif d'accouplement (201).

17. Poignée (100) ou poignée angulaire (200) selon la revendication 16, **caractérisée en ce que**
le raccordement (241) relie au moins un intervalle d'air (228) du générateur (203) au dispositif d'accouplement (201).

18. Poignée (100) ou poignée angulaire (200) selon une des revendications 15 à 17, **caractérisée en ce que**
le dispositif de refroidissement (240) comprenant l'élément récepteur (206) et/ou au moins une conduite à fluide.

19. Poignée (100) ou poignée angulaire (200) selon une des revendications précédentes, **caractérisée par**
un accumulateur d'énergie qui est raccordé ou peut être raccordé au générateur (103, 203).

20. Poignée (100) ou poignée angulaire (200) selon une des revendications précédentes, **caractérisée par**
un dispositif de réduction d'énergie qui est raccordé ou peut être raccordé au générateur (103, 203).

21. Poignée (100) ou poignée angulaire (200) selon une des revendications précédentes, **caractérisée en ce que**
le générateur (103, 203) est conçu de manière à pouvoir être stérilisé plusieurs fois.

22. Poignée (100) ou poignée angulaire (200) selon une des revendications précédentes, **caractérisée en ce que**
le générateur (103, 203) est raccordé ou peut être raccordé à un élément semi-conducteur optique pour irradier de la lumière visible de manière à ce que l'au moins un élément semi-conducteur optique puisse être alimenté en énergie électrique par le générateur (103, 203).
